# FASCICULE DE BREVET EUROPEEN

(11) **EP 1 816 859 B1**
(45) Date de publication et mention de la délivrance du brevet: **29.06.2016**
(21) Numéro de dépôt: 07002262.9
(22) Date de dépôt: 02.02.2007
(51) Int. Cl.: H04N 5/44, H04N 7/173

(54) **Procédé de transmission de programmes multimédias et appareils impliqués dans cette transmission**
Verfahren zur Übertragung von Multimedia-Programmen und für diese Übertragung vorausgesetzte Geräte
Method of transmitting multimedia programs and devices involved in this transmission

(30) Priorité: 03.02.2006 FR 0601021
(43) Date de publication de la demande: 08.08.2007
(73) Titulaire: SAGEMCOM BROADBAND SAS, 92500 Rueil Malmaison (FR)
(72) Inventeur: Eguren, Raynald, 78700 Conflans Sainte-Honorine (FR)
(74) Mandataire: Le Guen-Maillet

(56) Documents cités:
- US-A- 4 127 867
- US-A1- 2002 157 112

## Description

### Domaine technique

L'invention se situe dans le domaine de la télévision et plus généralement dans la transmission d'un programme multimédias, par exemple audiovisuel, à destination d'un appareil de restitution dudit programme.

### Art antérieur

Nous assistons aujourd'hui à une diversification des moyens de distribution des programmes multimédias à destination de l'utilisateur. Parmi ces divers moyens, il est possible de citer des offres de distribution de programmes par satellite, nécessitant un récepteur/décodeur satellite, des offres de distribution par câble, nécessitant un récepteur/décodeur câble, des offres hertziennes analogiques ou numériques comme la TNT (« Télévision Numérique Terrestre ») et depuis récemment des offres de distribution par réseau informatique du type Internet. On peut rajouter à ces offres, des offres de distribution via un support, la cassette VHS (« Video Home System » en anglais) de plus en plus remplacée par le DVD (« Digital Versatile Disc » en anglais). La qualité de l'information varie selon la qualité d'encodage, de la transmission et des moyens de diffusion.

Du fait de cette diversité dans les moyens de distribution des programmes multimédias, chacun de ces moyens nécessitant un appareil de réception adapté, il est nécessaire de prévoir la transmission du programme reçu entre l'appareil de réception ou de lecture et un appareil de restitution du programme, par exemple un écran de télévision. Cette transmission peut être faite par l'utilisation d'un câble du type péritel. Mais cette solution tend à être remplacée par des nonnes de transmission plus récentes et plus adaptées aux nouveaux formats de programmes comme la norme HDMI ( « High Definition Multimedia Interface »).

En effet, parallèlement à la diversification des moyens de distribution, nous assistons également à une diversification des formats utilisés pour la transmission des programmes. Ces divers formats, MPEG-2, MPEG-4, (« Moving Picture Expert Group » en anglais) et l'apparition de la haute définition, pour la vidéo ainsi que la diversification des formats sonores, stéréo, compressés ou non, multi-canaux et autres multiplient les types et les formats utilisés pour transporter des services multimédias. Cette multiplication rend nécessaire une grande souplesse et une grande adaptabilité dans les moyens de transmettre ces programmes à un appareil de restitution comme un écran de télévision.

Ces appareils de restitution, comme les écrans, doivent donc restituer dans les meilleures conditions des programmes de divers types qui leur parviennent dans une grande diversité de formats, de résolution et de qualité d'encodage. Cela rend nécessaire des traitements permettant l'amélioration de la restitution du programme par l'appareil de restitution. Ces traitements sont dépendants des caractéristiques physiques de l'appareil de restitution mais aussi des caractéristiques des divers programmes reçus. Il est en particulier nécessaire d'attacher une grande attention aux moyens mis en oeuvre pour l'affichage d'un programme en simple définition sur un écran haute résolution.

Ainsi, il est connu de pouvoir paramétrer un écran de télévision au moyen de menus de configuration de façon à le renseigner sur des informations telles que la luminosité, le degré de saturation des couleurs, le type de correction gamma employé, la correction gamma étant une correction sur la luminosité permettant de s'adapter à la perception non linéaire de la luminosité par l'oeil humain. Il est également possible de régler le niveau de la réduction de bruit appliquée aux images reçues. Pour le son, il est possible d'adapter, par exemple, le niveau de réponse du système de restitution sonore aux différentes fréquences par réglage d'un égaliseur.

Il est également connu de déterminer certaines caractéristiques du programme reçu, au niveau de l'appareil de restitution, par mesure. Dans ce cas, l'appareil peut par exemple analyser les images reçues pour déterminer des valeurs comme le contraste, le niveau de blanc, le niveau de noir ou autre.

Le réglage manuel des algorithmes d'amélioration de la restitution d'un programme multimédia pose le problème que l'utilisateur n'a pas toujours l'expertise nécessaire pour optimiser le réglage. D'autre part ce réglage est généralement fait une fois pour toute et l'utilisateur ne va généralement pas le modifier lorsqu'il reçoit des images d'un type différent par exemple en passant d'un programme de sport à du cinéma ou lorsqu'il change de source de programme, chaque source impliquant des caractéristiques différentes des programmes envoyés. Un tel réglage ne peut s'effectuer, en tout état de cause, que pour un programme donné. Il n'est pas possible de le faire en temps réel, par exemple image par image.

D'autre part, l'utilisation de mesures est limitée par la capacité de traitement de l'appareil de restitution. En particulier un traitement temps réel vidéo, image par image, est très gourmand en ressources. Les appareils de restitution ne sont généralement pas dotés de capacités permettant une analyse poussée en temps réel des programmes reçus. De plus, certaines informations peuvent ne pas être mesurables comme par exemple le type de programme diffusé.

### Exposé de l'invention

L'invention vise à résoudre ces problèmes par la transmission concomitante, à destination d'un appareil de restitution, de caractéristiques propres au contenu du programme transmis, via le canal utilisé pour la transmission du programme. Ces caractéristiques sont destinées à être utilisées par les fonctions d'amélioration de la restitution du programme.

De cette façon un appareil de restitution, par exemple un écran de télévision, peut optimiser ses fonctions d'amélioration des images ou du son reçu en fonction des caractéristiques propres au contenu de ces images et/ou de ce son. Cette adaptation peut être réalisée en continu, sans intervention de l'utilisateur et sans nécessiter de moyens de mesure et/ou d'analyse sophistiqués des programmes reçus au niveau de l'appareil de restitution. Le but étant d'offrir la qualité optimum d'affichage par le choix du traitement le plus adapté avec le contenu de la source.

L'invention concerne un procédé de transmission d'au moins une partie de programme multimédia à destination d'un appareil de restitution comprenant des moyens d'amélioration de la restitution de ladite partie de programme multimédia, comportant une étape de transmission du contenu numérique représentant ladite partie de programme multimédia où lors de l'étape de transmission du contenu sont également transmises concomitamment des informations relatives au contenu transmis et destinées à être utilisés par lesdits moyens d'amélioration de la restitution de ladite partie de programme multimédia.

Selon un mode de réalisation particulier de l'invention au moins une partie de l'étape de transmission est effectuée selon la norme MPEG-2.

Selon un mode de réalisation particulier de l'invention au moins une partie des informations relatives au contenu est transmise sous la forme de données insérées dans un descripteur privé de la PMT associée au programme.

Selon un mode de réalisation particulier de l'invention au moins une partie des informations relatives au contenu est transmise sous la forme de données insérées dans des sections privées du flux MPEG-2.

Selon un mode de réalisation particulier de l'invention au moins une partie des informations relatives au contenu est transmise sous la forme de données insérées dans un champs privé de l'entête des paquets PES de type vidéo.

Selon un mode de réalisation particulier de l'invention au moins une partie des informations relatives au contenu est transmise dans des champs privés des entêtes d'images.

Selon un mode de réalisation particulier de l'invention l'étape de transmission est conduite selon la norme HDMI.

Selon un mode de réalisation particulier de l'invention au moins une partie des informations relatives au contenu est transmise sous la forme de paquets de données insérés dans les périodes île de donnée de la transmission HDMI.

Selon un mode de réalisation particulier de l'invention le contenu numérique comportant un flux vidéo, au moins une partie de ces paquets de données sont transmis au rythme d'un paquet par image du flux vidéo, lesdits paquets de données contenant des informations relatives à ladite image du flux vidéo.

Selon un mode de réalisation particulier de l'invention au moins une partie de ces paquets de données contiennent des informations relatives à l'ensemble du contenu transmis.

Selon un mode de réalisation particulier de l'invention lesdits paquets de données sont transmis une seule fois lors de la transmission de ladite partie du programme.

Selon un mode de réalisation particulier de l'invention lesdits paquets de données sont transmis périodiquement lors de la transmission de ladite partie du programme.

L'invention concerne également un système de transmission d'au moins une partie d'un programme multimédia entre un appareil source et un appareil de restitution comprenant des moyens d'amélioration de la restitution de ladite partie de programme multimédia, comportant des moyens de transmission du contenu numérique représentant ladite partie de programme multimédia et où par ces moyens de transmission sont également transmises concomitamment des informations relatives au contenu transmis et destinée à être utilisés par lesdits moyens d'amélioration de la restitution de ladite partie de programme multimédia.

L'invention concerne également un appareil source d'au moins une partie de programme multimédia à destination d'un appareil de restitution comprenant des moyens d'amélioration de la restitution de ladite partie de programme multimédia, comportant des moyens de transmission du contenu numérique représentant ladite partie de programme multimédia et où par ces moyens de transmission sont également transmises concomitamment des informations relatives au contenu transmis et destinée à être utilisés par lesdits moyens d'amélioration de la restitution de ladite partie de programme multimédia.

L'invention concerne également un appareil de restitution d'au moins une partie d'un programme multimédia comportant des moyens d'amélioration de la restitution de ladite partie de programme multimédia, des moyens de réception du contenu numérique représentant ladite partie de programme multimédia et où par ces moyens de réception sont également reçues concomitamment des informations relatives au contenu reçu et destinée à être utilisés par lesdits moyens d'amélioration de la restitution de ladite partie de programme multimédia.

L'invention concerne également un signal à destination d'un appareil de restitution d'au moins une partie d'un programme multimédia comprenant des moyens d'amélioration de la restitution de ladite partie de programme multimédia, transmettant un contenu numérique représentant ladite partie de programme multimédia et où ce signal transmet concomitamment des informations relatives au contenu transmis et destinée à être utilisés par lesdits moyens d'amélioration de la restitution de ladite partie de programme multimédia.

### Brève description des dessins

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
La Fig. 1 représente un exemple de système selon l'invention.
La Fig. 2 représente un schéma d'ensemble d'un lien HDMI.
La Fig. 3 représente un exemple d'architecture d'appareil source de programme de restitution selon l' invention.
La Fig. 4 représente un exemple d'architecture d'appareil de restitution de programme multimédia selon l'invention.

### Exposé détaillé de l'invention

Nous appellerons programme multimédia un programme constitué de divers médias comme de la vidéo, de l'audio, des applications, de la logique ou autres. Ce type de programme est destiné à être restitué sur un appareil de restitution de programmes comme par exemple, un téléviseur, un appareil de vidéo projection, une console de jeux ou encore un ordinateur. Ces appareils de restitution disposent généralement au moins d'un écran permettant de restituer de la vidéo et des moyens, intégrés ou non, de restitution sonore. Ces moyens de restitution sonore peuvent aller d'un simple haut parleur monovoie à de sophistiqués systèmes multicanaux amplifiés. Ces appareils de restitution peuvent également être dotés de moyens de calculs plus ou moins sophistiqués permettant l'interprétation d'applications interactives pouvant enrichir le programme diffusé.

Le type et les formats utilisés pour transmettre ces programmes multimédias sont de plus en plus divers. La vidéo, par exemple, peut être plus ou moins compressée et transmise dans des résolutions variables. Des chaînes en basse résolution côtoient des chaînes en haute résolution tandis que les contraintes inhérentes aux divers moyens de transmission induisent des défauts dans les images reçues. Il en est de même pour le son qui peut également être plus ou moins compressé et être constitué de plus ou moins de canaux différents. Les appareils de restitution de ces programmes doivent donc relever le défi de restituer cette diversité à l'aide des moyens de restitution dont ils sont dotés. Un écran va devoir restituer des images possédant une résolution inférieure ou supérieure à sa résolution intrinsèque tandis qu'un système de reproduction sonore va devoir restituer un nombre de canaux supérieur ou inférieur au nombre de canaux dont il dispose. Il en résulte que les appareils de restitution sont amenés à effectuer des traitements sur les programmes reçus de façon à les adapter aux moyens de restitution dont il dispose et à en améliorer la restitution. Par exemple, un écran LCD (« Liquid Cristal Display » en anglais) haute résolution va effectuer des traitements comme des interpolations pour afficher une image basse résolution. Il appliquera également généralement un filtre permettant de réduire le bruit dans l'image reçue, etc. Par ailleurs, les différentes technologies d'écrans possèdent leurs propres caractéristiques colorimétriques et réponse lumineuse. Il est donc souvent nécessaire d'appliquer des corrections colorimétriques ainsi qu'une correction de la luminosité, comme par exemple une correction connue sous le nom de correction gamma, aux images reçues. C'est souvent la qualité de ces traitements qui fait aujourd'hui la différence entre les différents fabricants d'écrans. La même problématique s'applique à la restitution sonore.

Ces divers traitements appliqués aux données reçues pour en améliorer la restitution dépendent donc des caractéristiques techniques de l'appareil de restitution et du format des données reçues d'une part, mais également des caractéristiques intrinsèques du contenu de ces données d'autre part. Certaines de ces caractéristiques sont pertinentes pour l'ensemble d'un programme. On peut citer dans cette catégorie le profil gamma qui dépend des moyens utilisés pour générer le programme, type de caméra, vidéo générée par ordinateur ou autres, la source originelle de la vidéo qui définit une conversion colorimétrique particulière, il sera tenu compte qu'un vieux film implique une réduction du bruit ainsi que la compensation de couleurs fades tandis que l'on va apporter de la netteté à une source originelle d'images de sport et que le respect des couleurs sera primordial dans la restitution d'une oeuvre cinématographique. Le type de vidéo comme cinéma, sport, studio qui va orienter le type d'amélioration apportée tant pour l'image que pour le son. Un programme de cinéma va porter l'accent sur la spatialisation du son, tandis qu'un programme studio va privilégier les voies centrales ainsi que la reproduction des tons de chair. Pour un programme de sport, il est tenu compte qu'il va s'agir d'images rapides à forte dominante verte. On peut également citer dans cette catégorie des caractéristiques d'espaces colorimétriques permettant par exemple d'adapter la restitution en fonction du profil sRGB (« Standardized Red Green Blue » en anglais) défini par la norme «sRGB IEC61 1966-2.1 », cette adaptation pouvant servir lors de l'affichage de photos. Une autre caractéristique importante pouvant être prise en compte dans les fonctions d'amélioration de la restitution du programme est le taux de compression, par exemple exprimé sous la forme de la bande passante nécessaire pour la transmission du programme. Cette caractéristique va jouer sur le paramètre de netteté appliqué à l'image. L'indication de la température du blanc de l'image permet de régler les températures de restitution. La connaissance de la résolution native du programme permet de limiter l'effet de Gibb, encore appelé effet moustique ou « mosquito noise » en anglais, dans les hautes fréquences. Il est parfois nécessaire de modifier le format d'affichage d'une vidéo. En effet, les vidéos diffusées peuvent L'être au format 4:3 ou 16/9, tandis que le facteur de forme de l'écran de restitution n'est généralement pas modifiable. Il existe de multiples façons de réaliser cette adaptation, ajout de bandes noires, suppression de parties d'images ou étirement De plus, le format transmis ne correspond pas toujours au format d'origine de la vidéo transmise, par exemple le facteur de forme d'un film de cinéma n'est ni 4/3 ni 16/9. En conséquence la connaissance du format d'origine de l'image ou du moins des transformations d'échantillonnage qu'elle a pu subir permet de choisir le mode de changement de format à appliqué qui aura le meilleur rendu et de régler en conséquence le mode choisi.

D'autres caractéristiques sont pertinentes uniquement pour une image donnée. On peut citer dans cette catégorie des caractéristiques comme l'intervalle pris par les valeurs des points de l'image pour une composante, rouge, vert, bleu. La connaissance de ces intervalles va permettre d'effectuer un gain spécifique pour chaque composante permettant d'équilibrer l'image. On peut également citer les niveaux de blanc et de noir de l'image pour permettre une correction en luminosité permettant d'ajuster la dynamique et d'améliorer le contraste de l'image rendue. Il est également possible d'utiliser un indicateur de netteté défini comme la différence maximum de luminance entre deux pixels voisins de l'image. Les filtres utilisés pour réduire le bruit de l'image donnent de bons résultats lorsque les mouvements d'une image à une autre ne sont pas trop rapides mais tendent à dégrader le rendu lors de mouvements rapides. Il est donc bénéfique de disposer d'une information quant à la rapidité des mouvements de l'image pour ajuster dynamiquement le niveau de réduction de bruit qui lui est appliqué. La connaissance du nombre de macro blocs pour chaque image permet d'ajuster le paramètre de netteté.

Le fait de transmettre tout ou partie de ces informations, que ce soient les informations pertinentes au niveau de l'image ou les informations pertinentes au niveau du programme à destination de l'appareil de restitution permet donc à celui-ci d'adapter ses algorithmes d'amélioration du programme. Ces algorithmes concernent l'amélioration de l'image, du son et de tout média inclus dans le programme. L'amélioration de l'image se fait par filtrage, réduction de bruit, changement de résolution, modification de la colorimétrie etc. L'amélioration du son se fait par adaptation au nombre de canaux, par application d'égalisation spécifique ou encore par génération d'effets sonores comme la spatialisation virtuelle (« virtual surround » en anglais). L'un des avantages est d'adapter cette amélioration au contenu effectivement diffusé. Cette adaptation se fait au niveau du programme et/ou également au niveau élémentaire de chaque composante du programme. Elle peut se faire au niveau de chaque image pour la vidéo ou de chaque échantillon pour l'audio.

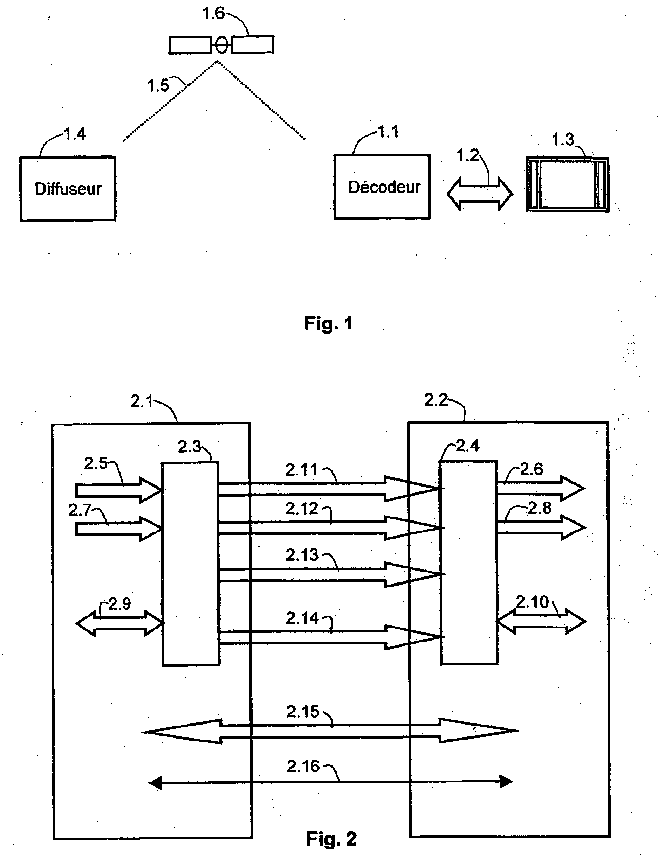

La Fig. 1 représente un exemple de système selon l'invention. Elle décrit la diffusion d'un programme multimédia. Cette diffusion est émise par un diffuseur 1.4. Dans l'exemple illustré, la diffusion se fait par l'intermédiaire d'un satellite référencé 1.6 qui diffuse le flux référencé 1.5 reçu du diffuseur 1.4 à destination d'un décodeur référencé 1.1. Ce décodeur 1.1 joue le rôle d'un appareil source de programmes, multimédias. Dans un cadre général cet appareil peut être un décodeur de télévision qui reçoit des programmes via un satellite, un câble, une diffusion hertzienne comme la TNT (« Télévision Numérique Terrestre») ou encore via un réseau de communication de donnée comme Internet dans le cas de la télévision sur ADSL (« Asymmetric Digital Subscriber Line » en anglais). Mais il peut également s'agir d'un lecteur de média comme un lecteur de DVD ou encore un ordinateur, la diffusion se faisant alors à l'aide de supports physiques. Les programmes produits par l'appareil source 1.1 sont transmis à un appareil 1.3 de restitution du programme via un canal de transmission 1.2. L'appareil de restitution peut être un téléviseur, un vidéo projecteur, un système « home cinéma ». Le canal de transmission 1.2 peut, par exemple, être constitué d'un câble péritel, d'un lien IEEE 1384, d'un câble s-vidéo ou bien d'un lien HDMI (« High Definition Multimedia Interface » en anglais). Dans certains cas, seule une partie du programme multimédia est transmise entre la source et l'appareil de restitution. Ceci est le cas quand plusieurs appareils sont chargés de la restitution de l'intégralité du service. On peut citer par exemple un programme audiovisuel dont la vidéo est transmise à un écran tandis que l'audio est transmise indépendamment à un système amplifié multicanaux du type « home cinéma ».

La transmission d'informations caractéristiques du contenu du programme à destination de l'appareil de restitution pour lui permettre d'adapter ses moyens d'amélioration du rendu du programme se découpe de manière générale en deux étapes de transmission. Une première étape permet la transmission entre le diffuseur du programme 1.4 et le récepteur 1.1. Tandis qu'une seconde étape de transmission est nécessaire entre le récepteur 1.1 vu en tant que source de programme multimédia et l'appareil de restitution 1.3. Dans certains modes de réalisation, le récepteur 1.1 et l'appareil de restitution 1.3 seront composés d'un seul et même appareil. On peut citer l'exemple d'un téléviseur intégrant un décodeur de télévision numérique terrestre. Dans ce cas, la seconde étape de transmission n'a plus lieu d'être.

Dans un mode particulier de réalisation de l'invention, la première étape de transmission se place dans le cadre d'une diffusion de programme utilisant la norme MPEG-2 (« Moving Picture Expert Group » décrite dans le document ISO 13818-1). Selon cette norme, les programmes sont divisés en composantes telles que la vidéo, l'audio et autres comme le télétexte. Ces composantes sont encapsulées dans des flux élémentaires, ces flux étant mélangés au sein d'un flux de transport. Chaque flux élémentaire est découpé en paquets de données numériques appelés paquets PES (« Packetized Elementary Stream » en anglais). A ces flux élémentaires contenant dès composantes du programme s'ajoutent des informations de services sous la forme de sections contenant des tables. Ces tables servent à identifier les différentes composantes contenues dans le flux. Il est également possible de définir des tables dites tables privées transmises dans des sections appelées sections privées qui peuvent contenir des informations non standardisées. Dans ce mode particulier de réalisation les informations caractéristiques du contenu pertinentes pour un programme entier sont transférées dans des descripteurs privés insérés dans une table du standard appelée PMT (« Program Map Table ») en l'associant à la description de la composante vidéo. Cette table est incluse dans chaque flux de transport MPEG-2 à raison d'un exemplaire par programme. Selon une variante du mode de réalisation, ces informations seront incluses dans des sections privées du flux de transport. Les informations pertinentes au niveau d'une image sont incluses dans le champ appelé « PES_private_data » qui est un champs de 128 bits localisé dans l'entête des paquets PES de type vidéo. Ceci impose, mais c'est généralement le cas, que l'encodeur soit configuré pour ne placer qu'une seule image dans un paquet PES de type vidéo. Dans le cas où l'on désire transporter une quantité d'informations supérieure à 128 bits il est nécessaire de prévoir une zone de données privées dans cet entête plus importante. Dans une variante du mode de réalisation, des champs privés sont ajoutés aux entêtes d'images ce qui nécessite de modifier les normes ISO13818-2 pour le MPEG-2 vidéo ou ISO14496-10 pour la vidéo H.264.

Pour ce qui est de l'étape de transmission entre un appareil source de programme multimédia tel qu'un décodeur et l'appareil de restitution, l'exemple de réalisation est basé sur la norme HDMI. Cette spécification est issue d'un groupe fondé par Hitachi, Matsushita, Philips, Silicon Image, Sony, Thomson et Toshiba. Elle se propose de transmettre des signaux audiovisuels de télévision numérique entre une source et un appareil de restitution. La Fig.2 en décrit l'architecture générale. HDMI définit des canaux de transmission de données entre une source 2.1 et un récepteur 2.2. Dans le cadre de la description de la transmission, l'appareil de restitution sera également appelé récepteur. Le câble HDMI et les connecteurs transportent quatre paires différentielles constituant les canaux de données TMDS (« Transition Minimized Differential Signaling » en anglais) et le canal d'horloge. Ces canaux sont transmis entre un émetteur HDMI, référencé 2.3 et un récepteur HDMI, référencé 2.4. De plus HDMI transporte un canal DCC (« Display Data Channel » en anglais), référencé 2.15, utilisé pour la configuration et l'échange de statuts entre une source et un récepteur. Un canal optionnel CEC (« Consumer Electronic Control » en anglais), référencé 2.16, fournit quant à lui des fonctions de contrôle de haut niveau entre les différents appareils audiovisuels de l'utilisateur. La vidéo 2.5, 2.6, l'audio 2.7, 2.8 ainsi que des informations de contrôle et de statut 2.9, 2.10 sont transmis via les trois canaux de données TMDS 2.11, 2.12 et 2.13. Le canal d'horloge TDMS 2.14 permet de transmettre une horloge à la fréquence pixel de la vidéo. Elle est utilisée par le récepteur comme fréquence de référence pour la récupération des données transmises sur les canaux de données TMDS. Le canal DCC est utilisé par la source pour lire les données E-EDID (« Enhanced Extended Display Identification Data » en anglais) de façon à connaître la configuration et les possibilités du récepteur.

Le lien HDMI opère en trois modes, un premier mode appelé période de données vidéo (« Video Data Period » en anglais), un second mode appelé période d'îles de données (« Data Island Period » en anglais) et enfin un mode appelé période de contrôle (« Control Period » en anglais). Ces modes se succèdent dans le temps, une période de contrôle venant toujours prendre place entre deux périodes de données vidéo ou d'îles de données. On retrouve ici un mode de transmission de la vidéo hérité de la transmission analogique où le signal vidéo correspondant à chaque ligne de l'image s'interrompt un temps appelé HBI (« Horizontal Blanking Interval » en anglais) entre deux lignes de la même image pour laisser le temps au canon à électron de l'écran de se positionner en début de la ligne suivante et un temps plus long appelé VBI (« Vertical Blanking Interval » en anglais) pour laisser le temps au canon à électron de revenir se positionner au début de la première ligne entre deux images successives. Les données numériques HDMI sont donc organisées en lignes, chaque ligne débutant par un HBI avant la transmission des valeurs des pixels vidéo de la ligne et chaque image étant séparée de la suivante par la transmission de plusieurs lignes de VBI. Ces temps non utilisés à la transmission de données vidéo effectives sont donc utilisés pour la transmission des périodes d'îles de données et des périodes de contrôle.

Le mode appelé période d'îles de données est utilisé pour transmettre des paquets de données. Ces paquets sont constitués d'un entête et d'un corps. Le premier octet de l'entête code le type de paquet transmis. La spécification HDMI prévoit un certain nombre de types parmi lesquels on peut citer 0x00 définissant le type NULL servant à transmettre des paquets vides dont toutes les données sont à 0 ou encore 0x02 définissant un type correspondant à un échantillon audio. Il est ainsi possible de transmettre les canaux audio liés à la vidéo transmise via le mode appelé période de donnée vidéo. Les types 0x80 à 0x85 sont définis comme codant des paquets appelés « infoFrame » en anglais. Ce type de paquets est défini dans la norme EIA/CEA-861B. En particulier, le type 0x81 correspond à un paquet « infoFrame » spécifique du vendeur, le type 0x82 à un paquet « infoFrame » AVI (« Auxiliary Video Information » en anglais), le type 0x83 à un paquet « infoFrame » contenant le descripteur de l'appareil source, le type 0x84 à un paquet « infoFrame » audio et le type 0x85 à un paquet « infoFrame » décrivant la source MPEG. Ces paquets « infoFrame » peuvent contenir jusqu'à 27 octets de données dans le corps.

Deux nouveaux types de paquets « infoFrame » sont définis pour transmettre les caractéristiques de contenu de l'image. Un premier type est codé 0x86, c'est un choix d'implémentation, tout autre codage n'interférant pas avec les types déjà définis dans la spécification pouvant convenir. Ce type est utilisé pour la transmission des informations concernant l'image courante. Les paquets « infoFrame » de ce type vont donc être transmis à la fréquence image. Un second type est codé 0x87. Ce type de paquet « infoFrame » est utilisé pour les informations concernant un programme entier et est donc transmis en début de programme. Une retransmission périodique peut être prévue pour permettre à un appareil de restitution qui n'aurait pas été en mesure de recevoir cette information ou l'aurait perdue de l'acquérir de nouveau. Une réémission peut également être prévue sur requête de l'appareil de restitution ou détection, par l'appareil source, d'un changement d'état de cet appareil de restitution.

La résolution minimale prévue par la norme HDMI est de 240 lignes de 1440 pixels. Sachant qu'un paquet « infoFrame » peut être envoyé en début de chaque ligne dans l'intervalle horizontal (« Horizontal Blanking Interval » en anglais) et que la norme définit 13 de ces paquets, il est au moins possible de transmettre 227 paquets « infoFrame » simultanément à une image. De plus, il est également possible de transmettre des paquets « infoFrame » dans l'intervalle vertical constitué d'au moins 23 lignes complètes.

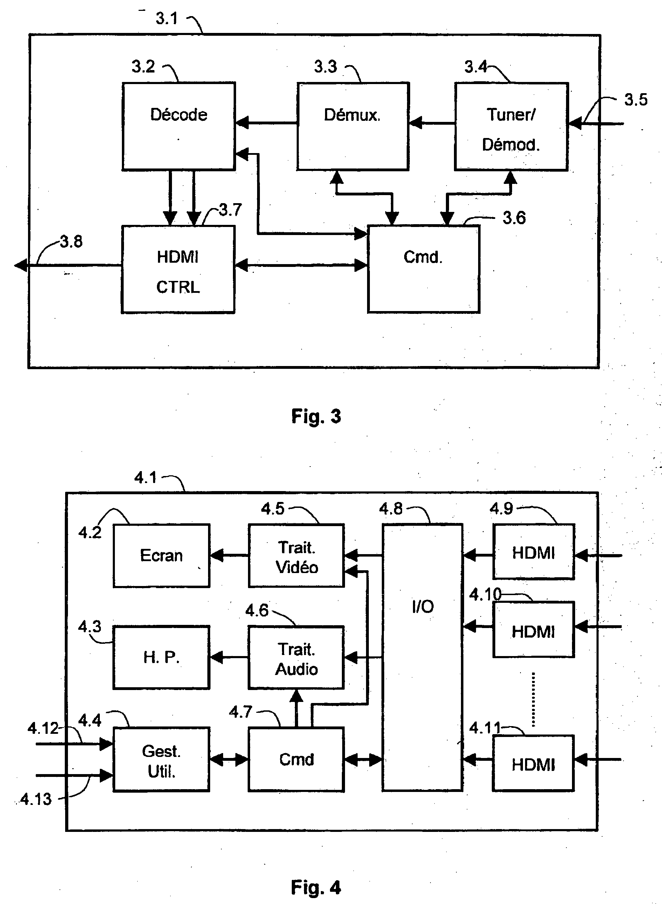

La Fig. 3 décrit un exemple d'architecture de source selon l'invention. L'exemple ici décrit concerne un décodeur de télévision numérique du type décodeur satellite. Ce décodeur 3.1 comprend un tuner/démodulateur 3.4 lui permettant de recevoir le flux numérique 3.5 en provenance du satellite. Ce flux est, par exemple, du type DVB (« Digital Video Broadcasting » en anglais) encodé en MPEG-2 (« Moving Picture Expert Group » en anglais). Ce type de flux peut contenir plusieurs programmes, ceux-ci étant regroupés dans le flux, on emploie le terme « multiplexé ». Le module appelé « démultiplexeur » ou « démux » 3.3 gère donc l'extraction du programme désiré au sein de ce flux. Ce programme extrait est généralement encodé, c'est-à-dire compressé et potentiellement crypté. Le module de décodage 3.2 s'occupe donc de décompresser et éventuellement décrypter le programme. Ce module fournit donc des flux séparés audio et vidéo qui peuvent être pris en charge par le module HDMI 3.7 pour une transmission 3.8 vers un appareil de restitution. Toutes ces opérations se déroulent sous le contrôle d'un module de contrôle 3.6 qui va gérer la sélection de la fréquence satellite émettant le flux, programmer le « démux » pour extraire le programme désirer, gérer les droits de l'utilisateur via le décodeur et enfin gérer la transmission HDMI. Dans le cadre de l'invention, des informations complémentaires caractéristiques des images et éventuellement des échantillons sonores sont introduites dans la transmission HDMI. Ces informations peuvent être mises à disposition par le diffuseur du programme et être transmises dans des tables privées du DVB. Dans ce cas elles sont donc transmises dans le flux et simplement récupérées par le décodeur qui va les injecter dans le lien HDMI. Certaines de ces informations, en particulier les informations comme le type de programme, peuvent également être disponibles via le guide électronique de programme. En effet, ces informations sur la programmation des différents services appelée guide électronique de programmes, sont généralement diffusées dans les flux DVB et donc disponibles pour le décodeur. D'autres informations peuvent également être calculées par le décodeur, elles peuvent par exemple être mesurées et produites par le module 3.2 lors du décodage. Le décodeur qui reçoit le programme sous la forme d'un flux émis par un diffuseur est également en mesure de mesurer la qualité du programme reçu en fonction de la qualité du canal de transmission entre le diffuseur et lui-même. Il peut calculer des informations comme le nombre de bits ou de paquets perdus. Sachant que ces erreurs de transmission ont un impact sur la qualité du programme restitué, ces informations peuvent être transmises à l'appareil de restitution qui va s'en servir pour régler en conséquence les algorithmes d'amélioration de la restitution. L'appareil de restitution peut, par exemple, effectuer des filtres permettant d'atténuer l'impact visuel de macro-blocs générés par une perte de données entre le diffuseur et l'appareil source.

Les informations pertinentes pour une image données vont être transmises sous la forme d'un paquet « infoFrame » émis concomitamment avec l'image à laquelle ils se rapportent via une période d'île de données. Tandis que les informations pertinentes pour le programme entier sont émises, par exemple, une seule fois en début de programme. Ces dernières peuvent toutefois être réémises périodiquement pendant toute la durée du programme ou à chaque fois que la source détecte la mise en route de l'appareil de restitution.

La Fig. 4, quant à elle décrit un exemple d'architecture d'appareil de restitution selon l'invention. L'exemple décrit est un téléviseur 4.1 équipé d'une pluralité d'entrées HDMI 4.9, 4.10, 4.11. Ces entrées HDMI sont gérées par un module 4.8 de gestion des entrées/sorties. Ce module 4.8 restitue les flux vidéo à destination du module de traitement vidéo 4.5, les flux audio à destination du module de traitement audio 4.6 sous le contrôle d'un module de contrôle 4.7. Selon l'invention, les informations complémentaires caractéristiques du contenu qui ont été transmises par la source et insérées dans le lien HDMI sont également récupérées par le module 4.8. Certaines de ses informations vont être directement transmises au module des traitement vidéo 4.5 en même temps que le flux vidéo. Il s'agit plus particulièrement des informations pertinentes pour chaque image transmise. D'autres informations concernant l'audio seront transmises au module 4.6 de traitement audio concomitamment au flux audio qu'elles décrivent. Tandis que certaines informations, plus particulièrement les informations pertinentes au niveau programme seront transmises directement au module de contrôle 4.7 qui les utilisera dans sa gestion des modules de traitement 4.5 et 4.6. Le module de traitement vidéo va donc appliquer des traitements visant à améliorer la qualité de la vidéo produite puis adresser l'écran 4.2 avec les images produites. Parallèlement le module 4.6 de traitement audio effectue un traitement analogue sur le flux audio qui sera converti en analogique à destination des hauts parleurs 4.3 de la télévision. Le module 4.4 permet quant à lui de gérer les interactions avec l'utilisateur via une réception de signaux infra rouges 4.12 et un panneau de touches de commandes 4.13 en coopération avec le module de commande 4.7.

Dans le lien HDMI, le canal TMDS en mode période île de données n'est pas le seul canal qui peut être utilisé pour transmettre ces données caractéristiques du contenu. Il est également possible d'utiliser le canal DCC qui exploite un bus I²C (« Inter Integrated Circuit Bus » en anglais). De la même façon, il est possible de transmettre certaines de ces informations via le canal CEC lorsque celui-ci est présent. Bien que ce dernier n'ait pas un débit suffisant pour une transmission temps réel d'informations liées à chaque image, il peut être utilisé pour la transmission d'informations pertinentes au niveau du programme.

Comme nous l'avons vu, dans un mode de réalisation particulier, le procédé de transmission se résume à une étape de transmission entre le diffuseur et un appareil cumulant les fonctions de récepteur du programme et d'appareil de restitution. Dans ce cas, les informations caractéristiques du contenu sont directement récupérées dans le flux et utilisées par les moyens d'amélioration de la restitution inclus dans l'appareil de restitution.

Il apparaîtra à l'homme du métier que l'invention ici décrite dans le cadre du lien HDMI peut s'appliquer à d'autres types de liens entre un appareil source de programmes multimédias et un appareil de restitution. Il est également évident d'étendre le mode de réalisation décrit dans le cadre d'une diffusion par satellite à une diffusion par câble, télévision numérique terrestre, ADSL ou autres. Tous ces modes de diffusions utilisent des flux de transport de type MPEG et peuvent donc inclure les informations relatives au contenu de la même manière que le mode de réalisation décrit. De plus, l'invention peut se généraliser à des modes de diffusion de programmes non basés sur MPEG où l'on aura insérer ce même type d'informations dans le but de permettre une adaptation des moyens d'amélioration de la restitution du service par l'appareil de restitution. De même, les paramètres cités ne représentent que des exemples illustrant le principe de la transmission concomitante au programme transmis d'informations caractéristiques du contenu du programme en vue d'être utilisées par des fonctions d'amélioration de la restitution du programme multimédia par l'appareil de restitution destinataire de la transmission.

## Revendications

1. Procédé de transmission d'au moins une partie de programme multimédia à destination d'un appareil de restitution comprenant des moyens d'amélioration de la restitution de ladite partie de programme multimédia, comportant :
- un première étape de transmission, par un diffuseur de programme, d'un flux de transport comprenant ladite partie du programme multimédia sous une forme encodée à destination d'un récepteur ;
- une seconde étape de transmission, par le récepteur, d'un contenu numérique représentant ladite partie de programme multimédia à destination de l'appareil de restitution, ledit contenu numérique résultant d'un décodage par le récepteur de ladite partie du programme multimédia comprise dans le flux de transport sous une forme encodée;
**caractérisé en ce que** :
- lors de la première et de la seconde étape de transmission sont également transmises concomitamment des informations relatives au contenu numérique transmis et destinées à être utilisés par lesdits moyens d'amélioration de la restitution de ladite partie de programme multimédia.

2. Procédé selon la revendication 1 où la première étape de transmission est effectuée selon la norme MPEG-2.

3. Procédé selon la revendication 2 où au moins une partie des informations relatives au contenu est transmise sous la forme de données insérées dans un descripteur privé de la PMT associée au programme.

4. Procédé selon la revendication 2 où au moins une partie des informations relatives au contenu est transmise sous la forme de données insérées dans des sections privées du flux MPEG-2.

5. Procédé selon la revendication 2 où au moins une partie des informations relatives au contenu est transmise sous la forme de données insérées dans un champs privé de l'entête des paquets PES de type vidéo.

6. Procédé selon la revendication 2 où au moins une partie des informations relatives au contenu est transmise dans des champs privés des entêtes d'images.

7. Procédé selon la revendication 1 où la seconde étape de transmission est conduite selon la norme HDMI.

8. Procédé selon la revendication 7 où au moins une partie des informations relatives au contenu est transmise sous la forme de paquets de données insérés dans les périodes île de donnée de la transmission HDMI.

9. Procédé selon la revendication 8 où, le contenu numérique comportant un flux vidéo, au moins une partie de ces paquets de données sont transmis au rythme d'un paquet par image du flux vidéo, lesdits paquets de données contenant des informations relatives à ladite image du flux vidéo.

10. Procédé selon la revendication 9 où au moins une partie de ces paquets de données contiennent des informations relatives à l'ensemble du contenu transmis.

11. Procédé selon la revendication 10 où lesdits paquets de données sont transmis une seule fois lors de la transmission de ladite partie du programme.

12. Procédé selon la revendication 10 où lesdits paquets de données sont transmis périodiquement lors de la transmission de ladite partie du programme.

13. Système de transmission d'au moins une partie d'un programme multimédia entre un appareil source et un appareil de restitution comprenant des moyens d'amélioration de la restitution de ladite partie de programme multimédia, comportant
- des premiers moyens de transmission, d'un diffuseur de programme vers un récepteur, d'un flux de transport comprenant ladite partie du programme multimédia sous une forme encodée ;
- des seconds moyens de transmission, du récepteur vers l'appareil de restitution, d'un contenu numérique représentant ladite partie de programme multimédia, ledit contenu numérique résultant d'un décodage par le récepteur de ladite partie du programme multimédia comprise dans le flux de transport sous une forme encodée ;
**caractérisé en ce que** par les premiers et seconds moyens de transmission sont également transmises concomitamment des informations relatives au contenu numérique transmis et destinées à être utilisées par lesdits moyens d'amélioration de la restitution de ladite partie de programme multimédia.

14. Appareil source d'au moins une partie de programme multimédia à destination d'un appareil de restitution comprenant des moyens d'amélioration de la restitution de ladite partie de programme multimédia, comportant des moyens de transmission d'un contenu numérique représentant ladite partie de programme multimédia, ladite partie du programme multimédia ayant été obtenue par l'appareil source dans un flux de transport sous une forme encodée, et ledit contenu numérique résultant d'un décodage de ladite partie du programme multimédia comprise dans le flux de transport sous forme encodée ;
**caractérisé en ce que** par ces moyens de transmission sont également transmises concomitamment des informations relatives au contenu numérique transmis comprise dans le flux de transport et destinées à être utilisées par lesdits moyens d'amélioration de la restitution de ladite partie de programme multimédia.

15. Appareil de restitution d'au moins une partie d'un programme multimédia comportant :
- des moyens d'amélioration de la restitution de ladite partie de programme multimédia, ladite partie du programme multimédia étant comprise dans un flux de transport sous une forme encodée ;
- des moyens de réception d'un contenu numérique représentant ladite partie de programme multimédia, ledit contenu numérique résultant d'un décodage de ladite partie du programme multimédia comprise dans le flux de transport sous forme encodée;
**caractérisé en ce que** par ces moyens de réception sont également reçues concomitamment des informations relatives au contenu reçu comprise dans le flux de transport et destinées à être utilisées par lesdits moyens d'amélioration de la restitution de ladite partie de programme multimédia.

16. Signal à destination d'un appareil de restitution d'au moins une partie d'un programme multimédia comprenant des moyens d'amélioration de la restitution de ladite partie de programme multimédia, ledit signal transmettant un contenu numérique représentant ladite partie de programme multimédia, et étant compris dans un flux de transport sous une forme encodée, ledit contenu numérique résultant d'un décodage dudit signal compris dans le flux de transport sous forme encodée;
**caractérisé en ce que** ce signal transmet concomitamment des informations relatives au contenu numérique transmis et destinées à être utilisées par lesdits moyens d'amélioration de la restitution de ladite partie de programme multimédia.

## Patentansprüche

1. Verfahren zum Übertragen von wenigstens einem Teil eines MultimediaProgramms an ein Wiedergabegerät umfassend Mittel zur Verbesserung der Wiedergabe des genannten Multimedia-Programmteils, Verfahren bestehend aus :
- einer ersten Stufe der Übertragung eines, den genannten Multimedia-Programmteil umfassenden Transportflusses in verschlüsselter Form von einem Programmanbieter an den Empfänger,
- eine zweite Stufe der Übertragung eines, den genannten Multimedia-Programmteil darstellenden digitalen Inhalts vom Empfänger an das Wiedergabegerät, wobei der digitale Inhalt aus einer Entschlüsselung durch den Empfänger des im Transportfluss in verschlüsselter Form enthaltenen genannten Multimedia-Programmteils hervorgeht,
**dadurch gekennzeichnet, dass** :
- während der ersten und zweiten Übertragungsstufe gleichzeitig auch Informationen bezüglich des übertragenen digitalen Inhalts übermittelt werden, die dazu bestimmt sind, von den genannten Mitteln zur Verbesserung der Wiedergabe des genannten Multimedia-Progammteils genutzt zu werden.

2. Verfahren gemäß Patentanspruch 1, in dem die erste Übertragungsstufe nach dem MPEG-2-Standard durchgeführt wird.

3. Verfahren gemäß Patentanspruch 2, in dem wenigstens ein Teil der inhaltsbezüglichen Informationen in Form von Daten übertragen wird, die in einen privaten Deskriptor der dem Programm zugeordneten PMT-Tabelle eingebettet sind.

4. Verfahren gemäß Patentanspruch 2, in dem wenigstens ein Teil der inhaltsbezüglichen Informationen in Form von Daten übertragen wird, die in private Abschnitte des MPEG-2-Flusses eingebettet sind.

5. Verfahren gemäß Patentanspruch 2, in dem wenigstens ein Teil der inhaltsbezüglichen Informationen in Form von Daten übertragen wird, die in ein privates Kopfteilfeld der PES-Videopakete eingebettet sind.

6. Verfahren gemäß Patentanspruch 2, in dem wenigstens ein Teil der inhaltsbezüglichen Informationen in privaten Feldern der Bildkopfteile übertragen wird.

7. Verfahren gemäß Patentanspruch 1, in dem der zweite Übertragungsschritt nach dem HDMI-Standard erfolgt.

8. Verfahren gemäß Patentanspruch 7, in dem wenigstens ein Teil der inhaltsbezüglichen Informationen in Form von Datenpaketen übertragen wird, die in Dateninselperioden der HDMI-Übertragung eingebettet sind.

9. Verfahren gemäß Patentanspruch 8, in dem wenigstens ein Teil dieser Datenpakete, aufgrund der Tatsache, dass der digitale Inhalt einen Videofluss enthält, im Rhythmus von einem Paket per Bild des Videoflusses übertragen wird, wobei die genannten Datenpakete Informationen bezüglich des genannten Bilds des Videoflusses beinhalten.

10. Verfahren gemäß Patentanspruch 9, in dem wenigstens ein Teil dieser Datenpakete Informationen bezüglich des gesamten übertragenen Inhalts beinhaltet.

11. Verfahren gemäß Patentanspruch 10, in dem die genannten Datenpakete einmalig bei der Übertragung des genannten Programmteils übermittelt werden.

12. Verfahren gemäß Patentanspruch 10, in dem die genannten Datenpakete periodisch bei der Übertragung des genannten Programmteils übermittelt werden.

13. System zur Übertragung von wenigstens einem Teil eines MultimediaProgramms zwischen einem Quellgerät und einem Wiedergabegerät umfassend Mittel zur Verbesserung der Wiedergabe des genannten Multimedia-Programmteils, das System beinhaltend
- erste Mittel zur Übertragung eines, den genannten Multimedia-Programmteil in verschlüsselter Form enthaltenden Transportflusses von einer Sendeanstalt zu einem Empfänger,
- zweite Mittel zur Übertragung eines, den genannten Multimedia-Programmteil darstellenden digitalen Inhalts vom Empfänger an das Wiedergabegerät, wobei der digitale Inhalt aus einer Entschlüsselung durch den Empfänger des genannten, im Transportfluss in einer verschlüsselten Form enthaltenen Multimedia-Programmteils hervorgeht,
**dadurch gekennzeichnet, dass** von den ersten und zweiten Übertragungsmitteln auch gleichzeitig Informationen bezüglich des übertragenen digitalen Inhalts übermittelt werden, die dazu bestimmt sind, von den genannten Mitteln zur Wiedergabeverbesserung des genannten Multimedia-Programmteils genutzt zu werden.

14. Quellgerät zum Übertragen wenigstens eines Teils des Multimediaprogramms an ein Wiedergabegerät umfassend Mittel zur Verbesserung der Wiedergabe des genannten Multimedia-Programmteils, beinhaltend Mittel zur Übertragung eines, den genannten Multimedia-Programmteil darstellenden digitalen Inhalts, wobei das Quellgerät den genannten Multimedia-Programmteil in einem Transportfluss in einer verschlüsselten Form erhalten hat und wobei der genannte digitale Inhalt aus einer Entschlüsselung des genannten, im Transportfluss in verschlüsselter Form enthaltenen Multimedia-Programmteils hervorgeht,
**dadurch gekennzeichnet, dass** durch diese Übertragungsmittel auch gleichzeitig Informationen bezüglich des übertragenen, im Transportfluss enthaltenen digitalen Inhalts übermittelt werden, die dazu bestimmt sind, von den genannten Mitteln zur Verbesserung der Wiedergabe des genannten Mumltimedia-Programmteils genutzt zu werden.

15. Gerät zur Wiedergabe wenigstens eines Teils eines Multimedia-Programms beinhaltend:
- Mittel zur Verbesserung der Wiedergabe des genannten Multimedia-Programmteils, wobei der genannte Multimedia-Programmteil in einem Transportfluss in einer verschlüsselten Form enthalten ist,
- Mittel zum Empfang eines, den genannten Multimedia-Programmteil darstellenden digitalen Inhalts, wobei der digitale Inhalt aus einer Entschlüsselung des genannten, im Transportfluss in verschlüsselter Form enthaltenen Multimedia-Programmteils hervorgeht,
**dadurch gekennzeichnet, dass** diese Empfangsmittel auch gleichzeitig Informationen bezüglich des im Transportfluss enthaltenen empfangenen Inhalts erhalten, die dazu bestimmt sind, von den genannten Mitteln zur Verbesserung der Wiedergabe des genannten Multimedia-Programmteils genutzt zu werden.

16. Signal an ein Wiedergabegerät wenigstens eines Teils eines Multimedia-Programms umfassend Mittel zur Verbesserung der Wiedergabe des genannten Multimedia-Programmteils, wobei das Signal einen, den genannten Multimedia-Programmteil darstellenden digitalen Inhalt überträgt, und wobei der digitale Inhalt aufgrund der Tatsache, dass er in einem Transportfluss in verschlüsselter Form enthalten ist, aus einer Entschlüsselung des genannten, im Transportfluss in verschlüsselter Form enthaltenen Signals hervorgeht,
**dadurch gekennzeichnet, dass** dieses Signal gleichzeitig Informationen bezüglich des übertragenen digitalen Inhalts übermittelt, die dazu bestimmt sind, von den genannten Mitteln zur Verbesserung der Wiedergabe des genannten Multimedia-Programmteils genutzt zu werden.

## Claims

1. Method for transmitting at least one multimedia program part destined for a restitution apparatus comprising means for improving the restitution of the said multimedia program part, comprising:
- a first step of transmission, by a program broadcaster, of a transport stream comprising the said part of the multimedia program in an encoded form destined for a receiver;
- a second step of transmission, by the receiver, of a digital content representing the said multimedia program part destined for the restitution apparatus, the said digital content resulting from a decoding by the receiver of the said part of the multimedia program which is included in the transport stream in an encoded form;
**characterized in that**:
- during the first and the second transmission step are also transmitted concomitantly information relating to the digital content transmitted, which information is intended to be used by the said means for improving the restitution of the said multimedia program part.

2. Method according to Claim 1 where the first transmission step is performed according to the MPEG-2 standard.

3. Method according to Claim 2 where at least part of the information relating to the content is transmitted in the form of data inserted into a private descriptor of the PMT associated with the program.

4. Method according to Claim 2 where at least part of the information relating to the content is transmitted in the form of data inserted into private sections of the MPEG-2 stream.

5. Method according to Claim 2 where at least part of the information relating to the content is transmitted in the form of data inserted into a private field of the header of the PES packets of video type.

6. Method according to Claim 2 where at least part of the information relating to the content is transmitted in private fields of the headers of images.

7. Method according to Claim 1 where the second transmission step is conducted according to the HDMI standard.

8. Method according to Claim 7 where at least part of the information relating to the content is transmitted in the form of data packets inserted into the data island periods of the HDMI transmission.

9. Method according to Claim 8 where, the digital content comprising a video stream, at least part of these data packets are transmitted at the tempo of one packet per image of the video stream, the said data packets containing information relating to the said image of the video stream.

10. Method according to Claim 9 where at least part of these data packets contain information relating to the whole of the transmitted content.

11. Method according to Claim 10 where the said data packets are transmitted just once during the transmission of the said part of the program.

12. Method according to Claim 10 where the said data packets are transmitted periodically during the transmission of the said part of the program.

13. System for transmitting at least part of a multimedia program between a source apparatus and a restitution apparatus comprising means for improving the restitution of the said multimedia program part, comprising
- first means for transmitting, from a program broadcaster to a receiver, a transport stream comprising the said part of the multimedia program in an encoded form;
- second means for transmitting, from the receiver to the restitution apparatus, a digital content representing the said multimedia program part, the said digital content resulting from a decoding by the receiver of the said part of the multimedia program which is included in the transport stream in an encoded form;
**characterized in that** by the first and second transmission means are also transmitted concomitantly information relating to the digital content transmitted, which information is intended to be used by the said means for improving the restitution of the said multimedia program part.

14. Source apparatus for at least one multimedia program part destined for a restitution apparatus comprising means for improving the restitution of the said multimedia program part, comprising means for transmitting a digital content representing the said multimedia program part, the said part of the multimedia program having been obtained by the source apparatus in a transport stream in an encoded form, and the said digital content resulting from a decoding of the said part of the multimedia program which is included in the transport stream in encoded form;
**characterized in that** by these transmission means are also transmitted concomitantly information relating to the digital content transmitted included in the transport stream and which information is intended to be used by the said means for improving the restitution of the said multimedia program part.

15. Restitution apparatus for at least part of a multimedia program comprising:
- means for improving the restitution of the said multimedia program part, the said part of the multimedia program being included in a transport stream in an encoded form;
- means for receiving a digital content representing the said multimedia program part, the said digital content resulting from a decoding of the said part of the multimedia program which is included in the transport stream in encoded form;
**characterized in that** by these reception means are also received concomitantly information relating to the content received included in the transport stream and which information is intended to be used by the said means for improving the restitution of the said multimedia program part.

16. Signal destined for a restitution apparatus for at least part of a multimedia program comprising means for improving the restitution of the said multimedia program part, the said signal transmitting a digital content representing the said multimedia program part, and being included in a transport stream in an encoded form, the said digital content resulting from a decoding of the said signal included in the transport stream in encoded form;
**characterized in that** this signal concomitantly transmits information relating to the digital content transmitted, which information is intended to be used by the said means for improving the restitution of the said multimedia program part.
